# EUROPEAN PATENT SPECIFICATION

(11) **EP 1 416 801 B1**
(45) Date of publication and mention of the grant of the patent: **27.09.2006**
(21) Application number: 02738168.0
(22) Date of filing: 13.06.2002
(51) Int. Cl.: A21D 13/08, A21D 8/02, A23G 9/50, A23G 9/48

(54) **BISCUIT FOR FROZEN CONFECTIONERY**
KEKS FÜR EISKONFEKT
BISCUIT POUR PATISSERIE CONGELEE

(30) Priority: 09.08.2001 EP 01203016
(43) Date of publication of application: 12.05.2004
(73) Proprietor: Société des Produits Nestlé S.A., 1800 Vevey (CH)
(72) Inventor: JUSTI, Holger, Werner, Moo Baan-Laddawan 33/341, 10280 Bangkok (TH)
(74) Representative: Thomas, Alain
(86) International application number: PCT/EP2002/006590
(87) International publication number: WO 2003/013260

(56) References cited:
- EP-A- 1 151 676
- DE-A- 4 319 452
- US-A- 3 393 074
- US-A- 3 409 442
- US-A- 3 431 112
- US-A- 3 508 926
- US-A- 4 650 685
- US-A- 4 659 582
- US-A- 6 039 988
- DATABASE WPI Section Ch, Week 197430 Derwent Publications Ltd., London, GB; Class D11, AN 1974-53811V XP002189555 -& CA 950 750 A (GENERAL FOODS CORP), 9 July 1974 (1974-07-09)

## Description

The present invention relates to the field of biscuit manufacture and more particularly to the field of biscuit manufacture adapted to composite frozen confectionery products in which a mass of frozen confectionery is combined with a biscuit.

Numerous products of the frozen confectionery type comprising biscuit exist. They may be, for example, "cones" in which ice cream is contained in a conical wafer. They may also be frozen cakes comprising alternate layers of ice cream, sorbet and biscuit.

The biscuit generally used is a relatively dry, brittle and crunchy biscuit of the wafer type, for example. Such a type of biscuit is particularly desirable because it exhibits good crunchiness and considerable ease of forming. After assembling the ice cream and the biscuit, the product is stored in the frozen state. However, during this storage, the biscuit exhibits a tendency towards a high uptake of moisture, both from the ice cream and from the external environment. Such a moisture uptake is damaging to the organoleptic qualities of the biscuit, the latter rapidly becoming soft, spongy and rubbery. A possible solution to this problem consists in applying a fat-based barrier layer between the biscuit and the ice cream. However, the problem is only partially solved because the uptake of moisture from the outside is not avoided. Furthermore, the presence of such a fat layer, which is solid at deep-freezing temperatures, is poorly perceived from the organoleptic point of view because it does not melt simultaneously with the ice cream and fatty residues remain in the mouth.

As regards the shape of the wafer-type biscuits, it is most often rectangular or square, and shapes which are oval, round, elliptical or which have an irregular or cut-out contour are very difficult or even impossible to obtain both because of the technology used during the manufacture of such products and their brittleness. Moreover, although these wafers are quite suitable for the production of various three-dimensional shapes such as cones or hemispheres, they need to be heated in order to ensure their malleability so as to adopt the shapes of the mould. Apart from the fact that it is expensive, such a step for shaping in the hot state complicates the process for manufacturing frozen confectionery products because it requires cooling in order to avoid a heat shock with the mass of frozen confectionery during filling or contacting.

CA(A) 950750 concerns a method of producing a pre-baked pastry crust which does not mention the use of an emulsifier.

US-A-3508926 relates to rework of wafer cone crumbs with fats, carbohydrate (cane syrup) and emulsifier, used together with ice cream.

US-A-4659582 concerns sugar confectionery bars with cereal crumbs coated with chocolate coating and emulsifier and formed.

EP-A-1151676 is concerned with a ready-to-eat cereal bar consisting of agglomerated particles of cooked cereal base which are coated with a binder comprising mainly sugars, milk solids, humectants and fat.

Finally, the aim of the present invention is intended to solve these various problems and consists in providing a biscuit which can be easily formed in the cold state into any flat or three-dimensional shape, which is crunchy and crisp, which does not disintegrate during handling and which, when used in combination with ice cream to produce a frozen confectionery, preserves such qualities during and after storage at the customary freezing temperatures.

To this end, the invention relates to a process for manufacturing a reconstituted biscuit composed of fragments of baked biscuit, agglomerated within a binder comprising at least one carbohydrate and fat, the biscuit having the characteristic feature of preserving its physical integrity, its shape and its crunchiness during stages of handling and/or of storage at a negative temperature.

The present invention also relates to a process for manufacturing a composite frozen confection comprising a biscuit prepared according to the process of the invention as well as a mass of frozen confectionery in contact with this biscuit. Thus, by virtue of the formulation of the biscuit according to the invention, the frozen confectionery obtained has the advantage of contrast in texture between the creamy and the melting of the mass of frozen confectionery and the crunchiness and the crispness of the biscuit, even after a long storage at freezing temperature, that is to say a temperature of less than -8°C, preferably less than -10°C.

The expression "fragments of biscuit" is understood to mean that they are particles of baked biscuit which are obtained after breaking of traditional biscuits. The said particles may be provided in the form of a more or less coarse sphere. The random distribution of the particles is such that about at least 60% of these particles have a mean diameter of between about 2 and 3 mm, preferably at least 90% of these particles have a mean diameter of between about 1 and 3 mm.

The expression "mass of frozen confectionery" is mainly understood to mean a dairy product-based frozen composition such as ice cream or frozen yoghurts, but also sorbets or water ice.

Thus, by virtue of the presence of the binder comprising at least one carbohydrate and fat within the biscuit manufactured according to the invention, the latter preserves its crunchiness throughout storage at low temperature in spite of the absence of a hydrophobic barrier layer between the ice cream and the biscuit. Indeed, the fragments of biscuit which provide the crunchiness of the biscuit preserve this crunchiness by virtue of the fat from the binder. This fat thus acts as a barrier to moisture and individually protects each fragment of biscuit from the migration of water both from the ice cream and from the ambient atmosphere. This fat, which is solid at freezing temperature, makes it possible to isolate the fragments of biscuit from any regain of moisture from the ice cream or from the external environment. Furthermore, because it does not constitute a coating having a imperceptible during consumption of the biscuit, which avoids the problem of a fatty mouth feel. These biscuit particles thus trapped in the total mass of the reconstituted biscuit of the assembly formed with the ice cream confer crunchiness and crispness on the biscuit in its entirety.

The carbohydrate entering into the composition of the binder may be chosen from the group comprising sucrose, maltodextrin or glucose syrup, used alone or as a mixture, for example. The binder may comprise from 20 to 40% of fat, 50 to 75% of carbohydrate and 0.01 to 5% of at least one emulsifier.

The present invention thus relates to a process for manufacturing a reconstituted biscuit in which:
- a mixture comprising 50 to 75 parts of fat, which is solid at room temperature, and 20 to 40 parts of carbohydrate is heated at a temperature and for a period of time sufficient to ensure melting of the fat,
- 60 to 90 parts of the preceding mixture are mixed with 10 to 30 parts of biscuit particles,
- the mixture is cooled, with stirring, to a temperature less than the melting point of the fat,
- a syrup is prepared by heating, with stirring, a mixture comprising 50 to 80 parts of carbohydrate, 20 to 50 parts of water, 2 to 10 parts of fat which is solid at room temperature and 0.01 to 5 parts of at least one emulsifier, at a temperature and for a period of time sufficient to ensure dissolution and emulsification of the ingredients,
- the syrup thus prepared at a temperature less than the melting point of the fat of the mixture comprising the biscuit particles is cooled,
- 40 to 80 parts of the mixture comprising the biscuit particles are mixed with 20 to 60 parts of syrup so as to obtain a malleable mass,
- the mass is formed in the shape of a biscuit,
- and the biscuit obtained is hardened by evaporating the water contained so as to obtain a product having a moisture of between 1 and 5%.

Thus, in a first stage, a coating mixture is prepared which is based on fat which is solid at room temperature and carbohydrate which will serve to coat the biscuit particles. This coating mixture thus comprises between 50 and 75% of fat which is solid at room temperature and 20 to 40% of carbohydrate. The fat in question may be a hydrogenated or partially hydrogenated vegetable oil such as a hydrogenated coconut oil, for example. The fat may thus be heated to a temperature greater than its melting point, for example in the region of 45-50°C, and the carbohydrate is then added, and then the whole may be mixed and homogenized in a roller-type mixer for example.

Subsequently, biscuit particles are added to the coating mixture in an amount of 60 to 90 parts of biscuit particles per 10 to 30 parts of coating mixture. The mixture obtained is then slowly cooled, with stirring, to a temperature less than the melting point of the fat in the coating mixture.

In parallel, a syrup is prepared by heating, to a temperature of the order of 80 to 120°C, a mixture comprising 50 to 80 parts of carbohydrate which may be crystal sucrose, 20 to 50 parts of water, 2 to 10 parts of fat which is solid at room temperature and 0.01 to 5% of at least one emulsifier. The fat which is solid at room temperature used for the preparation of this syrup may be identical to that entering into the composition of the coating mixture. The emulsifier may be chosen from the group comprising monoglycerides, diglycerides, lecithins, used alone or as a mixture. The syrup is mixed and homogenized so as to ensure the emulsification of the ingredients. The syrup may then be cooled to around room temperature, that is to say 20 to 30°C, so as to be at a temperature less than the melting point of the fat in the syrup and the coating mixture.

Finally, the coating mixture comprising the biscuit particles and syrup are mixed in a ratio of 40 to 80 parts of mixture to 60 to 20 parts of syrup.

The mixture obtained is homogenized so as to form a sort of malleable lump which can be formed at room temperature into any desired shape. This lump has a moisture of the order of 5 to 15%. The reconstituted biscuits obtained may then be left to one side to cool and then stored in carton packaging.

The forming of the biscuit mass may be carried out at room temperature. This forming may be carried out by extrusion, moulding or even laminating. Preferably, the forming is carried out by pressing in a mould having a desired shape for example. It may thus be a parallepipedal mould which is filled with the biscuit mass which is then compacted and compressed so as to compress and agglomerate the particles and thus adopt the shapes and the details of the mould. By virtue of the malleability of the biscuit mass according to the invention, diverse and varied shapes may be obtained such as triangles, discs, ovals. Furthermore, this forming stage may also be carried out using a three-dimensional mould; the biscuit mass is introduced into a hollow mould of desired shape and a complementary part forms the biscuit by compression. This may thus be a pointed die compressing the mass in a conical mould in order to form a cone-type biscuit or a round die compressing the mass in question in a hemispherical mould so as to form a sort of hemispherical shell made of biscuit mass. Once a flat shape has been produced, it can also be formed into the shape of a cylinder which may be filled with a mass of frozen confectionery for example. The reconstituted biscuit formed may have the typical thickness of a traditional biscuit, that is to say about 2 to 20 mm and preferably about 3 to 10 mm. The thickness of the reconstituted biscuit is not necessarily uniform and may vary within a defined range; thus a biscuit having a hemispherical shape may have a base which is thicker than the walls for example.

The biscuit mass may thus be pressed in a conical mould using a die in order to obtain a biscuit having the shape of a cone which will serve as a receptacle for the frozen mass of frozen confectionery. The shaping may also be carried out by extrusion or lamination of the biscuit mass in the form of plates or bands which may be cut to the desired sizes and thus serve for the production of frozen sandwiches comprising a portion of ice cream between two biscuits. The bands for a biscuit may be cut using a hollow punch so as to obtain attractive shapes; such as discs, ovals with sinuous edges, or even figurines for example. Finally, the biscuit mass may also be compacted in a mould of any shape so as to adopt the shapes thereof, and then filled with ice cream.

After the forming stage, the biscuit can then be subjected to a more or less extensive drying stage so as to give it maximum crunchiness, which corresponds to a final moisture in the reconstituted biscuit of the order of 1 to 5%. The drying may be carried out by pressing the biscuit formed in a hot-air drying tunnel, at a temperature of the order of 40 to 150°C for example, for a period of the order of 10 to 60 minutes for example. The drying stage serves in the first place to bring about the final hardening of the reconstituted biscuit but can also contribute to the development of its flavour. Indeed, during this drying stage, the residual water is partially evaporated, the carbohydrate of the binder crystallizes and the whole hardens, conferring on the final product its crunchy and crisp texture, and by virtue of the Maillard reactions which may occur during this drying stage, flavours may also develop.

The biscuit mass prepared according to the invention has the advantage of being capable of being formed into practically any shape, this being at room temperature using conventional industrial equipment such as a laminator, an extruder, hollow punches or simple moulds. Such a biscuit has the advantage, in addition to preserving its crunchiness, of being easy to form at room temperature, which is more economical and furthermore does not pose the problem of a possible heat shock and avoids a cooling stage, unlike what occurs with wafers. Furthermore, the biscuit mass according to the invention may be formed endlessly without prior heating.

The reconstituted biscuit prepared according to the present invention, by virtue of its properties of crunchiness and by virtue of the binder coating the particles of baked biscuit, is thus particularly well suited to frozen confectionery applications in which this biscuit is combined with a frozen confectionery mass such as ice cream, for example. The present invention therefore also relates to a process for manufacturing a composite frozen confectionery comprising bringing a biscuit prepared according to the present invention in contact with a frozen confectionery mass. The frozen confectionery products prepared according to the invention may thus be provided in the form of conical biscuits, domes or even biscuit tubes which are filled with ice cream and optionally partially or completely coated with chocolate but also frozen sandwiches comprising a mass of frozen confectionery maintained between two biscuits for example. These confectionery products may also be provided in the form of frozen cakes in which layers of ice cream and biscuit alternate, such as frozen milles-feuilles or frozen sandwiches for example. Moreover, they also be provided in the form of a frozen confectionery mass comprising biscuit pieces randomly dispersed within it, which makes it possible to provide a pleasant contrast in texture during consumption between the crunchiness of the biscuit and the creaminess of the ice cream, where appropriate.

### EXAMPLE 1: Manufacture of a biscuit

### Preparation of the coating mixture and coating:

66.7 parts of hydrogenated coconut oil are heated to 45°C and then 33.3 parts of icing sugar are added and the mixture is homogenized.

20 parts of this mixture are mixed with 80 parts of fragments of biscuit of the "petit beurre" type having a mean particle size of 1.5 mm. The whole is cooled to room temperature.

### Preparation of the syrup:

A mixture comprising 67 parts of sucrose, 28 parts of water, 5 parts of hydrogenated coconut oil and 0.2 part of saturated fatty acid monodiglyceride is heated to around 106°C and homogenized so as to ensure good emulsification of the fat/oil/sugar syrup mixture. The syrup obtained is slowly cooled to around 25°C.

### Preparation of the lump:

50 parts of syrup are mixed and homogenized with 50 parts of mixture comprising the fragments of biscuit.

### Forming:

Aliquots of lump are placed and compressed in rectangular moulds with round corners of 10 cm x 12 cm and 5 mm deep.

The biscuits formed are unmoulded and placed on a greased sheet metal plate.

### Hardening:

The biscuits formed are dried and hardened by putting them through a pulsed-air oven at 80°C for 17 minutes.

The biscuits obtained have a residual moisture of 2%, are crunchy and crisp while being easy to handle without risk of breaking.

### EXAMPLE 2: Composite frozen confectionery

The biscuits as obtained in Example 1 are used to manufacture a frozen confectionery comprising a vanilla ice cream.

The ice cream is manufactured from the following ingredients:
10 parts of milk powder
0.5 part of emulsifier (CREMODAN® )
0.5 part of vanilla flavour
8 parts of hydrogenated vegetable oil
14 parts of sugar
4 parts of glucose syrup
63 parts of water

The various ingredients are dispersed at 65°C for 20 minutes. The mixture is then homogenized at 180 bar and then pasteurized at 86°C for 20 seconds. After cooling to 5°C, the mixture is matured for 24 hours at 4°C. Finally, the mixture is frozen at about -5°C with an overrun of 100%. The ice cream obtained is hardened in a tub at -30°C by conventional means.

A vanilla ice cream parallelepiped of 10 cm × 12 cm and 2 cm thick is cut and placed in sandwich form between two biscuits (previously cooled to 5°C) as obtained in Example 1.

The product is stored at -18°C for 3 months. During consumption, the frozen confectionery biscuit does not disintegrate, does not crack and has characteristics of crunchiness and crispness which are similar to those of the product at the start of storage.

## Claims

1. Process for manufacturing a reconstituted biscuit in which:
- a mixture comprising 50 to 75 parts of fat, which is solid at room temperature, and 20 to 40 parts of at least one carbohydrate is heated at a temperature and for a period of time sufficient to ensure melting of the fat,
- 60 to 90 parts of the preceding mixture are mixed with 10 to 30 parts of biscuit particles,
- the mixture is cooled, with stirring, to a temperature less than the melting point of the fat,
- a syrup is prepared by heating, with stirring, a mixture comprising 50 to 80 parts of at least one carbohydrate, 20 to 50 parts of water, 2 to 10 parts of fat which is solid at room temperature and 0.01 to 5 parts of at least one emulsifier, at a temperature and for a period of time sufficient to ensure dissolution and emulsification of the ingredients,
- the syrup thus prepared at a temperature less than the melting point of the fat of the mixture comprising the biscuit particles is cooled,
- 40 to 80 parts of the mixture comprising the biscuit particles are mixed with 20 to 60 parts of syrup so as to obtain a malleable mass,
- the mass is formed in the shape of a biscuit,
- and the biscuit obtained is hardened by evaporating the water contained so as to obtain a product having a moisture of between 1 and 5%.

2. Process according to Claim 1, **characterized in that** the hardening stage is carried out by drying with hot air at a temperature of between 40 and 150°C, for 10 to 60 minutes.

3. Process according to Claim 1, **characterized in that** the random distribution of the particles of the biscuit is such that at least 60% of these particles have a mean diameter of between about 2 and 3 mm.

4. Process according to Claim 1, **characterized in that** the random distribution of the particles of the biscuit is such that at least 90% of these particles have a mean diameter of between about 1 and 3 mm.

5. Process according to Claim 1, **characterized in that** the fat is a hydrogenated vegetable fat.

6. Process according to Claim 1, **characterized in that** the carbohydrate of the binder is chosen from the group consisting of sucrose, maltodextrin, glucose syrup used alone or as a mixture.

7. Process for manufacturing a composite frozen confection which comprises providing a biscuit manufactured according to the process of anyone of claims 1 to 6 and bringing it in contact with a frozen confectionery mass.

8. Process according to claim 7, comprising pressing the biscuit mass to form a cone-type or hemispherical shell or forming a flat shape which is in turn formed into the shape of a cylinder, and filling said cone, shell or cylinder with a mass of frozen confectionery.

9. Process according to claim 7, comprising extruding or laminating the biscuit mass into plates or bands which are cut to the desired shapes and producing frozen sandwiches comprising a portion of frozen confectionery mass between two biscuits or frozen cakes in which biscuit layers alternate with frozen confectionery masses.

10. Process according to claim 7, comprising forming the biscuit into pieces and randomly dispersing the pieces into a frozen confectionery mass.

## Patentansprüche

1. Verfahren zum Herstellen eines rekonstituierten Kekses, wobei:
- eine Mischung, welche 50 bis 75 Teile von Fett, welches bei Raumtemperatur fest ist, und 20 bis 40 Teile von zumindest einem Kohlenhydrat umfasst, bei einer Temperatur und über einen Zeitraum erhitzt wird, welche ausreichen, um Schmelzen des Fetts sicherzustellen,
- 60 bis 90 Teile der vorhergehenden Mischung mit 10 bis 30 Teilen von Keks-Partikeln gemischt werden,
- die Mischung unter Rühren auf eine Temperatur abgekühlt wird, welche niedriger ist als der Schmelzpunkt des Fetts,
- durch Erhitzen einer Mischung, welche 50 bis 80 Teile von zumindest einem Kohlenhydrat, 20 bis 50 Teile Wasser, 2 bis 10 Teile bei Raumtemperatur festen Fetts und 0,01 bis 5 Teile zumindest eines Emulgators umfasst, unter Rühren bei einer Temperatur und über einen Zeitraum, welche ausreichen, um Auflösen und Emulgieren der Ingredienzien sicherzustellen, ein Sirup hergestellt wird,
- der auf diese Weise präparierte Sirup auf eine Temperatur gekühlt wird, welche geringer ist als der Schmelzpunkt des Fetts der die Keks-Partikel umfassenden Mischung,
- 40 bis 80 Teile der die Keks-Partikel umfassenden Mischung mit 20 bis 60 Teilen des Sirups gemischt wird, um eine knetbare Masse zu erhalten,
- die Masse in Form eines Kekses geformt wird,
- und der erhaltene Keks mittels Verdampfens des enthaltenen Wassers gehärtet wird, um ein Produkt zu erhalten, welches eine Feuchtigkeit von zwischen 1 und 5% aufweist.

2. Verfahren gemäß Anspruch 1, **dadurch gekennzeichnet, dass** der Härte-Schritt durch Trocknen mit heißer Luft bei einer Temperatur zwischen 40 und 150°C für 10 bis 60 Minuten ausgeführt wird.

3. Verfahren gemäß Anspruch 1, **dadurch gekennzeichnet, dass** die Zufalls-Verteilung der Partikel des Kekses derart ist, dass zumindest 60% dieser Partikel einen mittleren Durchmesser von zwischen 2 und 3 mm aufweisen.

4. Verfahren gemäß Anspruch 1, **dadurch gekennzeichnet, dass** die Zufalls-Verteilung der Partikel des Kekses derart ist, dass zumindest 90% dieser Partikel einen mittleren Durchmesser von zwischen 1 und 3 mm aufweisen.

5. Verfahren gemäß Anspruch 1, **dadurch gekennzeichnet, dass** das Fett ein hydriertes pflanzliches Fett ist.

6. Verfahren gemäß Anspruch 1, **dadurch gekennzeichnet, dass** das Kohlenhydrat des Binders aus der Gruppe ausgewählt ist, welche aus Saccharose, Maltodextrin, Glukose-Sirup, einzeln verwendet oder als Mischung, besteht.

7. Verfahren zum Herstellen eines gefrorenen Komposit-Konfektes, welches Bereitstellen eines gemäß des Verfahrens gemäß einem der Ansprüche 1 bis 6 hergestellten Kekses, und dessen In-Kontakt-Bringen mit einer gefrorenen Konfekt-Masse umfasst.

8. Verfahren gemäß Anspruch 7, umfassend: Pressen der Keks-Masse zum Formen einer kegelartigen oder halbkugelförmigen Schale/Hülse, oder Formen einer flachen Form, welche ihrerseits in die Form eines Zylinders geformt wird, und Füllen dieses Kegels, dieser Schale/Hülse oder dieses Zylinders mit einer Masse aus gefrorenem Konfekt.

9. Verfahren gemäß Anspruch 7, umfassend: Extrudieren oder Laminieren der Keks-Masse in Platten oder Streifen, welche in die gewünschten Formen geschnitten werden, und Herstellen von gefrorenen Sandwichs, welche eine Portion gefrorener Konfekt-Masse zwischen zwei Keksen oder gefrorenen Kuchen/Platten umfassen, wobei sich Keks-Lagen mit gefrorenen Konfekt-Massen abwechseln.

10. Verfahren gemäß Anspruch 7, umfassend: Formen des Kekses in Stücke und zufälliges Verteilen der Stücke in einer gefrorenen Konfekt-Masse.

## Revendications

1. Procédé de fabrication d'un biscuit reconstitué dans lequel :
- un mélange comprenant 50 à 75 parties de matière grasse, qui est solide à température ambiante, et 20 à 40 parties d'au moins un glucide, est chauffé à une température et pendant une période suffisantes pour assurer la fusion de la matière grasse,
- 60 à 90 parties du mélange précédent sont mélangées à 10 à 30 parties de particules de biscuit,
- le mélange est refroidi, sous agitation, jusqu'à une température inférieure au point de fusion de la matière grasse,
- un sirop est préparé en chauffant, sous agitation, un mélange comprenant 50 à 80 parties d'au moins un glucide, 20 à 50 parties d'eau, 2 à 10 parties de matière grasse qui est solide à température ambiante et 0,01 à 5 parties d'au moins un émulsifiant, à une température et pendant une période suffisantes pour assurer la dissolution et l'émulsification des ingrédients,
- le sirop ainsi préparé à une température inférieure au point de fusion de la matière grasse du mélange comprenant les particules de biscuit est refroidi,
- 40 à 80 parties du mélange comprenant les particules de biscuit sont mélangées à 20 à 60 parties de sirop de manière à obtenir une masse malléable,
- la masse est façonnée en forme de biscuit,
- et le biscuit obtenu est durci en faisant évaporer l'eau qu'il contient de manière à obtenir un produit dont la teneur en humidité est comprise entre 1 et 5%.

2. Procédé selon la revendication 1, **caractérisé en ce que** l'étape de durcissement s'effectue par séchage à l'air chaud à une température comprise entre 40 et 150°C, pendant 10 à 60 minutes.

3. Procédé selon la revendication 1, **caractérisé en ce que** la distribution aléatoire des particules de biscuit est telle qu'au moins 60% de ces particules ont un diamètre moyen compris entre environ 2 et 3 mm.

4. Procédé selon la revendication 1, **caractérisé en ce que** la distribution aléatoire des particules de biscuit est telle qu'au moins 90% de ces particules ont un diamètre moyen compris entre environ 1 et 3 mm.

5. Procédé selon la revendication 1, **caractérisé en ce que** la matière grasse est une matière grasse végétale hydrogénée.

6. Procédé selon la revendication 1, **caractérisé en ce que** le glucide du liant est choisi parmi le groupe constitué par le saccharose, la maltodextrine et le sirop dé glucose, utilisé seul ou en mélange.

7. Procédé de fabrication d'une confiserie congelée composite qui comprend la fourniture d'un biscuit fabriqué selon le procédé de l'une quelconque des revendications 1 à 6 et sa mise en contact avec une masse de confiserie congelée.

8. Procédé selon la revendication 7, comprenant la compression de la masse de biscuit pour façonner une coquille de forme conique ou hémisphérique ou pour la formation d'une forme plate qui est, à son tour, façonnée en forme de cylindre, et le garnissage dudit cône, de ladite coquille ou dudit cylindre avec une masse de confiserie congelée.

9. Procédé selon la revendication 7, comprenant l'extrusion ou le laminage de la masse de biscuit en des plaques ou des bandes qui sont découpées pour obtenir les formes désirées et la production de sandwichs congelés comprenant une portion de la masse de confiserie congelée insérée entre deux biscuits ou gâteaux congelés, dans lesquels les couches de biscuit alternent avec les masses de confiserie congelées.

10. Procédé selon la revendication 7, comprenant le façonnage du biscuit en morceaux et la dispersion aléatoire des morceaux dans une masse de confiserie congelée.
